# FASCICULE DE BREVET EUROPEEN

(11) **EP 1 045 072 B1**
(45) Date de publication et mention de la délivrance du brevet: **09.06.2004**
(21) Numéro de dépôt: 00460025.0
(22) Date de dépôt: 03.04.2000
(51) Int. Cl.: E01C 23/09, F16H 7/12

(54) **Machine à scier les sols**
Bodenschneidvorrichtung
Ground cutting apparatus

(30) Priorité: 12.04.1999 FR 9904759
(43) Date de publication de la demande: 18.10.2000
(73) Titulaire: DIAMANT BOART Société Anonyme, 1190 Bruxelles (BE)
(72) Inventeur: Richard, Daniel, 41260 La Chaussee St.-Victor (FR)
(74) Mandataire: Maillet, Alain

(56) Documents cités:
- DE-A- 3 022 317
- DE-A- 4 017 630
- GB-A- 1 004 806
- US-A- 5 765 926

## Description

La présente invention concerne une machine à scier les sols. Elle concerne plus particulièrement les moyens qui sont utilisés pour permettre l'entraînement du disque à tronçonner de ladite machine.

On connaît déjà les machines à scier les sols tels que dans le document US-A-5 765 926 et elles sont généralement constituées d'un châssis mobile sur lequel, d'une part, repose un moteur dont l'arbre est pourvu d'une poulie menante et, d'autre part, est monté un autre arbre dont une extrémité est pourvue d'un disque à tronçonner qui va scier le sol et dont l'autre extrémité est pourvue d'une poulie menée.

Une courroie est engagée entre les poulies menante et menée de manière que le moteur puisse entraîner le disque à tronçonner.

Dans les machines connues, on utilise généralement plusieurs courroies parallèles entre elles du type trapézoïdal. Cependant, ce type de courroies est limité quant à la puissance qu'elles peuvent transmettre généralement inférieure à 10 CV. De plus, le réglage de leur tension est difficile à obtenir du fait que les courroies présentent des longueurs légèrement différentes. Enfin, ce type de courroies est relativement difficile à remplacer.

On a cherché à proposer une machine dont le moteur d'entraînement du disque à tronçonner soit de puissance supérieure, par exemple de l'ordre de 15 à 20 CV.

Les courroies à section trapézoïdale ne peuvent être utilisées.

On a donc cherché à utiliser des courroies du type courroie plate qui est pourvue de plusieurs bandes parallèles à section trapézoïdale. Ces courroies sont généralement employées pour des puissances moyennes dans le domaine d'automobile ou l'industrie. Ces courroies, si elles transmettent bien des puissances relativement élevées, n'en nécessitent pas moins des réglages de la tension.

On a donc cherché à proposer une machine à scier les sols dont le réglage de la tension de courroie soit relativement facile à mettre en oeuvre et dont le changement de ladite courroie soit également aisé.

Pour ce faire, une machine à scier les sols selon la présente invention est caractérisée en ce qu'elle comprend un tendeur de courroie constitué d'un galet au bout d'un bras pivotant prévu pour exercer une pression sur le brin mou de ladite courroie, ledit bras étant fixé sur ledit châssis au moyen d'une vis dont l'axe correspond à l'axe de pivotement dudit bras, ladite vis présentant un pas tel que la réaction de la courroie sur le galet a tendance au serrage dudit bras sur ledit châssis.

Afin d'accroître l'enroulement de la courroie sur la poulie menante, le galet se trouve à proximité de ladite poulie menante.

Selon une autre caractéristique de l'invention, l'axe de pivotement dudit bras se trouve à proximité de la seconde poulie entraînée et la vis présente un pas à gauche.

Selon une autre caractéristique de l'invention, l'extrémité dudit bras qui est fixée sur ledit châssis comporte une entretoise de section polygonale d'axe perpendiculaire audit bras, ladite entretoise étant serrée contre ledit châssis au moyen de ladite vis.

Selon une autre caractéristique de l'invention, l'ensemble formé desdites poulies menante et menée, de ladite courroie et dudit tendeur est logé dans un carter qui est pourvu d'une fente au droit de ladite entretoise pour le passage d'une clef engagée dans ladite entretoise.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est une vue en perspective d'une machine à scier les sols selon l'invention, la courroie passée entre les poulies menante et menée n'étant pas montée et n'étant donc pas visible,
La Fig. 2 est une vue en perspective de l'ensemble formé des poulies menante et menée de la courroie et du tendeur d'une machine à scier les sols selon l'invention,
La Fig. 3 est une vue en perspective d'une machine à scier les sols selon l'invention et, ce, d'un point de vue différent de celui de la Fig. 1.

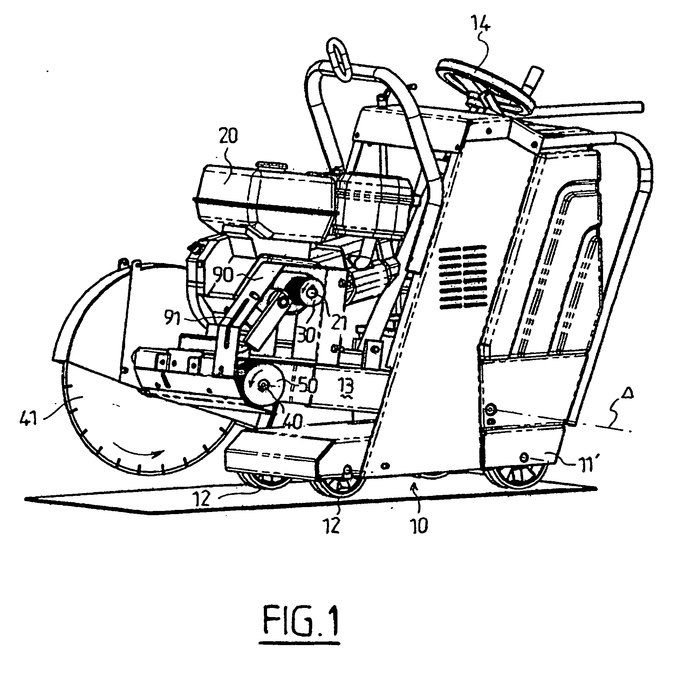

La machine à scier les sols représentée à la Fig. 1 comprend un châssis mobile 10 essentiellement constitué d'une embase 11 pourvue de quatre roues 12 et un cadre 13 articulé de manière à pouvoir pivoter par rapport à l'embase 11 autour d'un axe Δ. Sur le cadre 13 repose un moteur 20 qui est pourvu en bout de son arbre moteur 21 d'une poulie menante 30. A l'extrémité du cadre 13 est prévu un arbre 40 dont une première extrémité est pourvue d'un disque à tronçonner 41 et dont l'autre extrémité est pourvue d'une poulie menée 50.

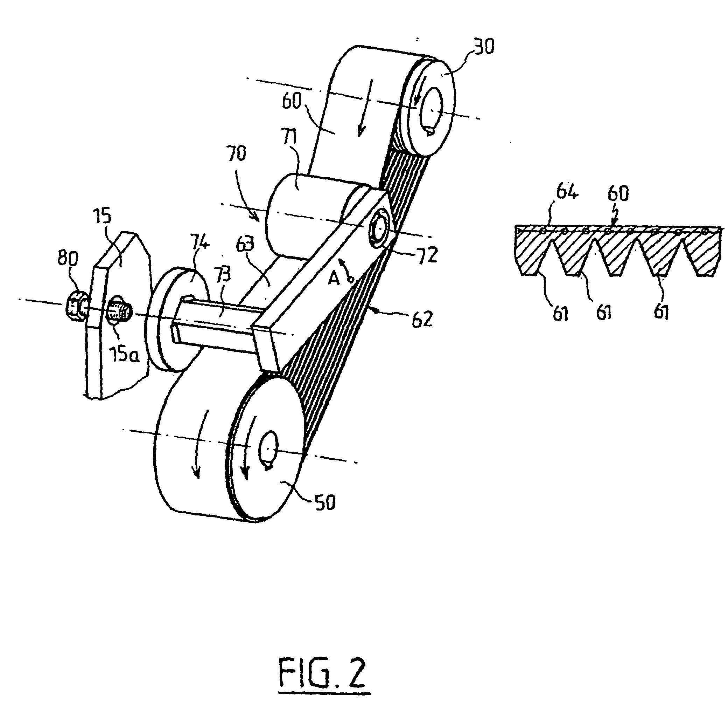

Comme cela est représenté à la Fig. 2, une courroie 60 est passée entre la poulie menante 30 et la poulie menée 50. La courroie 60 est du type courroie plate qui est pourvue de plusieurs bandes parallèles entre elles 61 à section trapézoïdale, comme cela est représenté dans l'encart de la Fig. 2.Une trame 64 est également prévue dans le corps de ladite courroie. Le disque à tronçonner 41 travaille en avalant de manière à pouvoir entraîner la machine lorsqu'il pénètre dans le sol. Pour le faire pénétrer dans le sol, on actionne un volant 14, ce qui a pour effet de faire basculer le cadre 13 par rapport à l'embase 11.

Les sens de rotation du moteur 20, de la poulie 30 et de la poulie 50 sont figurés sur les Figs. 1 et 2 par des flèches.

Comme cela est visible à la Fig. 2, la courroie 60 présente entre les poulies menante 30 et menée 50 deux brins, un brin tendu 62 et un brin mou 63. Un tendeur de courroie 70 est constitué d'un galet 71 au bout d'un bras 72 prévu pour exercer une pression sur le brin mou 63 de la courroie 60. Avantageusement, cela est réalisé au voisinage de la poulie 30 en bout de l'arbre moteur 21 du moteur 20 afin d'améliorer l'enroulement et l'adhérence de la courroie 60 sur la poulie menante 30. La pression exercée par le galet 71 sur le brin 63 permet à la courroie 60 d'être tendue entre les poulies 30 et 50, ceci afin d'assurer une répartition homogène de la pression et d'améliorer l'entraînement de l'arbre de la scie 41.

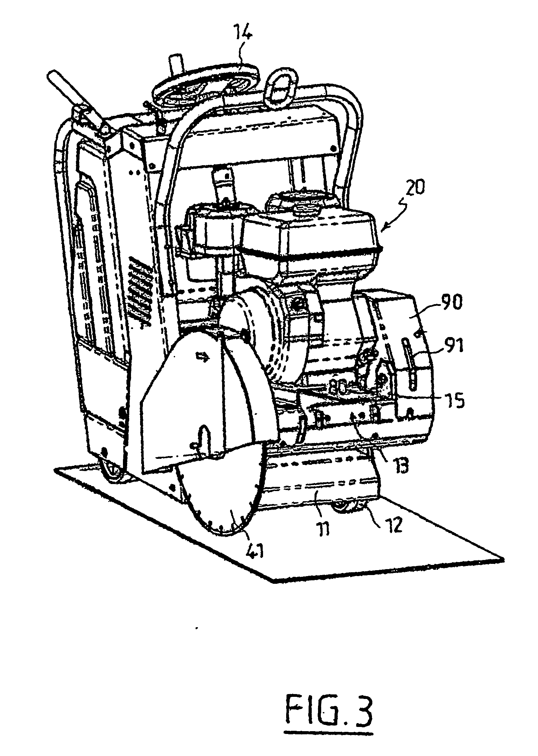

Le bras 72 est fixé sur le cadre 13 du châssis 10 de la manière suivante. Une patte 15 (visible aux Figs. 2 et 3) est solidaire du châssis 13 et se trouve dans un plan parallèle à un plan contenant la courroie 60. La patte 15 est percée d'un trou 15a de manière à pouvoir laisser passer la tige d'une vis 80. L'extrémité du bras 72 opposée à celle qui est pourvue du galet 71 comporte une entretoise 73 de section polygonale (par exemple hexagonale) dont l'axe est perpendiculaire audit bras 72. On notera que le bras 72 peut pivoter autour de cet axe.

L'extrémité libre de l'entretoise 73 comporte une collerette 74. L'entretoise 73 est percée en son axe d'un trou fileté prévu pour recevoir la vis 80. En vissant la vis 80 dans le trou fileté de l'entretoise 73, on serre la collerette 74 de l'entretoise 73 contre la patte 15, si bien que le tendeur 70 devient fixé sur le cadre 13 du châssis 10.

Pour mettre en place le tendeur 70, on procède de la manière suivante. On dévisse légèrement la vis 80, et à l'aide d'une clé engagée sur les pans de l'entretoise 73, on fait pivoter le bras 72 autour de l'axe de la vis 80 et ce, de manière à tendre la courroie 60. Lorsque la tension désirée est obtenue, on serre la vis 80, ce qui a pour effet de fixer le tendeur 70 dans cette position.

L'entretoise 73 est par exemple à six pans. Quant au galet 71, il est par exemple monté à l'extrémité du bras 72 par l'intermédiaire de roulements à billes.

Selon l'invention, la vis 80 présente un pas tel que la réaction de la courroie 60 sur le galet 71 et donc sur l'extrémité du bras 72, a tendance au serrage du bras 72, et par conséquent de la collerette 74 de l'entretoise 73, contre la patte 15.

Tel que cela est représenté à la Fig. 2, la réaction de la courroie 60 sur le bras 72 a pour effet de faire pivoter le bras 72 autour de l'axe de la vis 80 dans le sens qui est montré par une flèche A. Pour que ce sens ait tendance au serrrage de la vis 80, celle-ci doit, dans la configuration de la Fig. 2, présenter un pas à gauche.

L'ensemble qui est formé des poulies 30 et 50 de la courroie 60 et du tendeur 70 est logé dans un carter 90 qui est normalement fermé par un couvercle de manière à rendre inaccessible, en fonctionnement normal, la courroie 60. A la Fig. 1, le couvercle du carter 90 est retiré et n'est donc pas visible.

Ce carter 90 présente au droit de l'entretoise 73 du tendeur 70 une fente 91 qui est prévue pour le passage d'une clé engagée sur les pans de l'entretoise 73.

On comprendra que grâce à cette fente 91, il n'est pas nécessaire de démonter le couvercle du carter 90 pour réajuster la tension de la courroie 60. En effet, il suffit pour ce faire de passer la clé par la fente 91 de manière à faire pivoter le bras 72 autour de l'axe de la vis 80.

On comprendra qu'il faut disposer d'une autre clé pour dévisser puis ensuite revisser la vis 80.

Pour le changement de la courroie 60, on procède de la manière suivante. On ouvre le couvercle du carter 90, si bien que l'on a accès à la courroie 60. On dévisse la vis 80 et on fait pivoter le bras 72 de manière à complètement détendre la courroie 60. Ensuite, il est possible de la dégager des poulies 30 et 50 et de la retirer. On place ensuite la nouvelle courroie 60 sur les poulies 30 et 50, l'on fait pivoter le tendeur 70 de manière à retendre la nouvelle courroie 60, et lorsque la tension désirée est obtenue, on serre la vis 80. On ferme ensuite le couvercle du carter 90.

## Revendications

1. Machine à scier les sols, du type qui comprend un châssis mobile (10) sur lequel, d'une part, repose un moteur (20) dont l'arbre (21) est pourvu d'une poulie menante (30) et, d'autre part, est monté un arbre (40) dont une extrémité est pourvue d'un disque à tronçonner (41) et dont l'autre extrémité est pourvue d'une poulie menée (50), une courroie (60) étant passée dans les gorges desdites première et seconde poulies (30 et 50) de manière que ledit moteur (20) puisse entraîner ledit disque (41), **caractérisée en ce qu'**elle comprend un tendeur de courroie (70) constitué d'un galet (71) au bout d'un bras pivotant (72) prévu pour exercer une pression sur le brin mou (63) de ladite courroie (60), ledit bras (72) étant fixé sur ledit châssis (10) au moyen d'une vis (80) dont l'axe correspond à l'axe de pivotement dudit bras (72), ladite vis (80) présentant un pas tel que la réaction de la courroie (60) sur le galet (71) a tendance au serrage dudit bras (72) sur ledit châssis (10).

2. Machine selon la revendication 1, **caractérisée en ce que** le galet (71) se trouve à proximité de la première poulie menante (30).

3. Machine selon la revendication 2, **caractérisée en ce que** l'axe de pivotement dudit bras (72) se trouve à proximité de la seconde poulie menée (50) et **en ce que** la vis (80) présente un pas à gauche.

4. Machine selon une des revendications précédentes, **caractérisée en ce que** l'extrémité dudit bras (72) qui est fixée sur ledit châssis (10) comporte une entretoise (73) de section polygonale d'axe perpendiculaire audit bras (72), ladite entretoise (73) étant serrée contre ledit châssis (10) au moyen de ladite vis (80).

5. Machine selon la revendication 4, **caractérisée en ce que** l'ensemble formé desdites poulies (30 et 50), de ladite courroie (60) et dudit tendeur (70) est logé dans un carter (90) qui est pourvu d'une fente (91) au droit de ladite entretoise (73) pour le passage d'une clef engagée dans ladite entretoise (73).

## Patentansprüche

1. Maschine zum Durchsägen von Böden, umfassend ein bewegliches Gestell (10), auf dem einerseits ein Motor (20) liegt, dessen Welle (21) mit einer antreibenden Rolle (30) versehen ist, und andererseits eine Welle (40) befestigt ist, deren Ende mit einer Ablängscheibe (41) versehen ist und deren anderes Ende mit einer angetriebenen Rolle (50) versehen ist, wobei ein Riemen (60) in den Rillen der ersten und zweiten Rolle (30 und 50) verläuft, so dass der Motor (20) die Scheibe (41) antreiben kann,
**dadurch gekennzeichnet, dass**
sie einen Riemenspanner (70) umfasst, der von einer Rolle (71) am Ende eines Schwenkarmes (72) gebildet ist, der dazu vorgesehen ist, einen Druck auf den spannungslosen Teil (63) des Riemens (60) auszuüben, wobei der Arm (72) auf dem Gestell (10) mit Hilfe einer Schraube (80) befestigt ist, deren Achse der Schwenkachse des Arms (72) entspricht, wobei die Schraube (80) eine derartige Steigung aufweist, dass die Reaktion des Riemens (60) auf die Rolle (71) dazu neigt, den Arm (72) auf dem Gestell (10) festzuklemmen.

2. Maschine nach Anspruch 1, **dadurch gekennzeichnet, dass** sich die Rolle (71) in der Nähe der ersten antreibenden Rolle (30) befindet.

3. Maschine nach Anspruch 2, **dadurch gekennzeichnet, dass** sich die Schwenkachse des Arms (72) in der Nähe der zweiten angetriebenen Rolle (50) befindet, und dass die Schraube (80) eine Linkssteigung aufweist.

4. Maschine nach einem der vorhergehenden Ansprüche, **dadurch gekennzeichnet, dass** das Ende des Arms (72), das auf dem Gestell (10) befestigt ist, eine Querstrebe (73) mit einem polygonalen Querschnitt mit einer auf den Arm (72) senkrechten Achse umfasst, wobei die Querstrebe (73) gegen das Gestell (10) mit Hilfe der Schraube (80) geklemmt wird.

5. Maschine nach Anspruch 4, **dadurch gekennzeichnet, dass** die Einheit, die von den Rollen (30 und 50), dem Riemen (60) und dem Riemenspanner (70) gebildet ist, in einem Gehäuse (90) untergebracht ist, das mit einem Schlitz (91) im rechten Winkel zu der Querstrebe (73) für den Durchgang eines in der Querstrebe (73) im Eingriff stehenden Schlüssels versehen ist.

## Claims

1. Ground-cutting machine of the type which comprises a mobile chassis (10) carrying, on the one hand, a motor (20) the shaft of which (21) is fitted with a drive pulley (30) and, on the other hand, a shaft (40) one end of which is fitted with a cutting disc (41) and the other end of which is fitted with a driven pulley (50), a belt (60) being passed through the grooves on the said first and second pulleys (30 and 50) so that the said motor (20) can drive the said disc (41 ), **characterised in that** it comprises a belt tensioning pulley (70) made up of a roller (71) at the end of a pivoting arm (72) intended to exert pressure on the slack side (63) of the said belt (60), the said arm (72) being attached to the said chassis (10) by means of a screw (80), the axis of which corresponds to the axis of pivot of the said arm (72), the said screw (80) having a thread such that the reaction of the belt (60) on the roller (71) tends to tighten the said arm (72) on the said chassis (10).

2. Machine according to Claim 1 **characterised in that** the roller (71) is positioned close to the first drive pulley¹ (30).

3. Machine according to Claim 2 **characterised in that** the axis of pivot of the said arm (72) is positioned close to the second driven pulley¹ (50) and **in that** the screw (80) has a lefthand thread.

4. Machine according to one of the preceding claims **characterised in that** the end of the said arm (72) which is attached to the said chassis (10) has a crosspiece (73) with a polygonal cross-section and an axis perpendicular to the said arm (72), the said crosspiece (73) being tightened against the said chassis (10) by means of the said screw (80).

5. Machine according to Claim 4 **characterised in that** the assembly formed by the said pulleys (30 and 50), the said belt (60) and the said belt tensioning pulley (70) is housed in a casing (90) which has a slit (91) in line with the said crosspiece (73) to allow a spanner fitting into the said crosspiece (73) to pass through.
